# EUROPÄISCHE PATENTSCHRIFT

(11) **EP 3 789 642 B1**
(45) Veröffentlichungstag und Bekanntmachung des Hinweises auf die Patenterteilung: **04.05.2022**
(21) Anmeldenummer: 20193791.9
(22) Anmeldetag: 01.09.2020
(51) Int. Cl.: F16K 17/04, F16K 24/04

(54) **SICHERHEITSVENTIL**
SAFETY VALVE
SOUPAPE DE SÉCURITÉ

(30) Priorität: 05.09.2019 AT 507782019
(43) Veröffentlichungstag der Anmeldung: 10.03.2021
(73) Patentinhaber: Oswald Kienbacher GmbH, 4540 Bad Hall (AT)
(72) Erfinder: SCHENNER, Andreas, 4421 ASCHACH A. D. STEYR (AT); KIENBACHER, Oswald, 4523 NEUZEUG (AT)
(74) Vertreter: Babeluk, Michael

(56) Entgegenhaltungen:
- EP-A1- 3 284 985
- CN-A- 106 356 486
- DE-A1- 2 537 510
- JP-A- H03 159 058
- JP-U- S 522 126
- JP-U- S5 066 118
- US-A- 3 257 237
- US-A- 3 516 870
- US-A1- 2009 155 672
- US-B2- 6 844 104

## Beschreibung

Die Erfindung betrifft ein Sicherheitsventil, insbesondere für ein Gehäuse wie ein Batteriegehäuse, mit einem Grundkörper, zumindest einem elastischen Element und einem Ventilteil, wobei das elastische Element den Ventilteil in eine geschlossene Stellung vorspannt, wobei der Ventilteil in der geschlossenen Stellung an dem Grundkörper anliegt und zumindest eine Auslassöffnung des Grundkörpers verschließt, wobei das elastische Element einstückig mit dem Grundkörper verbunden ist.

Sicherheitsventile, oder auch Überdruckventile, dienen der Entlüftung von Räumen, wenn der Druck im Raum einen bestimmten Grenzwert überschreitet. Dabei kann das Sicherheitsventil dafür ausgelegt sein, mehrmals bestimmungsgemäß öffenbar zu sein, oder nur einmal verwendbar zu sein und, nachdem einmal der Grenzdruck überschritten wurde, eine Wartung oder Ersatz notwendig ist.

Dabei handelt es sich bei solchen Räumen meist um durch Gehäuse abgeschlossene Räume, welche mit einem Fluid wie Gas oder einer Flüssigkeit gefüllt sind. Insbesondere bei Batteriegehäusen werden solche Sicherheitsventile zum Ablassen von Fluid im Zerstörungsfall der Batterie verwendet, um eine unkontrollierte Explosion des Gehäuses zu vermeiden.

In der WO 2005/108835 A1 wird ein Ventil offenbart, welches einen Grundkörper und ein im Grundkörper hineingelegtes Blattelement aufweist, wobei das Blattelement eine Verbindung zum Grundkörper und elastische Elemente aufweist, die einen Ventilteil halten. Die elastischen Elemente werden in den Grundkörper hineingelegt, wodurch die elastischen Elemente den Ventilteil gegenüber dem Grundkörper vorspannen. Danach wird ein weiteres Teil des Grundkörpers zur Fixierung und zum Schutz des Blattelements aufgesetzt. Eine derartige Ausführungsform ist relativ aufwendig im Aufbau und daher auch recht fehleranfällig im Zusammenbau. Um den Zusammenbau möglichst einfach zu halten ist das Blattelement einstückig aus Metall ausgeführt, was jedoch unvorteilhaft ist, da somit die Beschaffenheit und Stabilität des Ventilteils nicht unabhängig von den Eigenschaften der elastischen Elemente gewählt werden kann. Durch die thermische Kopplung werden die elastischen Elemente unter Umständen über den Ventilteil aufgeheizt, was zu Änderungen in der Elastizität und damit Änderungen der Grenztemperatur führen kann, bei der das Ventil öffnet.

Die JP S522126 U, die CN 106356486 B, DE 2537510 A1, US 2009/155672 A1 und US 3,257,237 A zeigen Ventile der angegebenen Art. Jedoch haben all diese Ventile gemein, dass zum Zusammenbau das Ventilteil auf einen unteren oder oberen Gehäuseteil angeordnet wird, und dann das entsprechende andere Gehäuseteil daraufgesetzt oder unten angesetzt wird. Dies ist aufwändig und erzwingt das Einsetzen des Ventilteils bereits bei Zusammenbau des Gehäuses.

Aufgabe der Erfindung ist damit, ein Sicherheitsventil der genannten Art bereitzustellen, welches einen erleichterten Zusammenbau ermöglicht.

Diese Aufgabe wird erfindungsgemäß dadurch gelöst, dass der Ventilteil zwischen das elastische Element und eine um die Auslassöffnung angeordnete Auflagefläche des Grundkörpers einschiebbar ist.

Durch die einstückige Ausführungsform wird erreicht, dass die elastischen Elemente schon direkt mit der Herstellung des Grundkörpers mit diesem verbunden werden können oder gemeinsam mit ihm hergestellt werden. Damit kann der gesamte Grundkörper einstückig hergestellt werden und in einem zweiten Schritt der Ventilteil im Grundkörper angeordnet werden. Damit ist eine Ausführungsform aus nur zwei Stücken möglich, also eine besonders einfache, kostengünstige und schnell herzustellende. Darüber hinaus ist auch der Zusammenbau erleichtert, da nur zwei Teile zusammengeführt werden müssen.

Durch die zweistückige, also trennbare Ausführung des elastischen Elements und dem Ventilteil kann das Material des Ventilteils unabhängig vom Material des elastischen Elements bestimmt werden. Damit kann der Ventilteil, welcher am intensivsten mit dem abzuschließenden Raum in Berührung kommt, so gewählt werden, dass er den thermischen oder chemischen Ansprüchen gut stand hält, das elastische Element aber trotzdem stehts mit vorgesehener Kraft den Ventilteil auf die Auslassöffnung drückt.

Die Auslassöffnung ist dabei eine Öffnung, welche vom Grundkörper umgrenzt wird und mit dem zu sichernden Raum strömungsverbunden ist. Damit entspricht der Druck im Bereich der Auslassöffnung im Wesentlichen dem Innendruck des Raumes, beispielsweise des Innenraumes eines Gehäuses. Dafür ist die Auslassöffnung in der Regel über einer Öffnung einer Wand des Raumes angeordnet.

Mit elastischem Element ist dabei ein Element gemeint, dass zumindest soweit elastisch verbiegbar ist, dass es den Ventilteil gegen den Grundkörper drückt und vorspannt. Dabei muss das elastische Element nicht zwangsläufig so elastisch sein, dass es sich bei Öffnen des Ventils, also bei Überschreiten eines Schwellen- oder Grenzdrucks, ausschließlich elastisch verbiegt. Es kann auch vorgesehen sein, dass sich das elastische Element beim Öffnen plastisch verformt oder bricht.

Es können mehrere elastische Elemente vorgesehen sein, welche vorzugsweise gleichmäßig um den Ventilteil angeordnet sind.

Der Grundkörper kann zum Einbau oder Anbringen an einer Dichtungsfläche, wie einer Batteriegehäusewand, vorgesehen sein. Dabei kann der Grundkörper auch mit der Dichtungsfläche einstückig verbunden sein.

Mit geschlossener Stellung ist dabei eine Stellung des Sicherheitsventils gemeint, bei dem der Ventilteil auf der Auslassöffnung aufliegt und diesen verschließt. Es handelt sich also um die bestimmungsgemäße, betriebsmäßige Stellung des Ventils, die es einnimmt, wenn der Grenzdruck, bei dem es öffnet, nicht überschritten wurde.

Besonders vorteilhaft ist, dass der Ventilteil zwischen das elastische Element und eine um die Auslassöffnung angeordnete Auflagefläche des Grundkörpers einschiebbar ist. Dabei weist der Ventilkörper vorzugsweise eine dichte Verbindung zur Auflagefläche in Einbaustellung auf. Wenn der meist flach ausgeführte Ventilteil zwischen das elastische Element und der Auflagefläche eingeschoben wird, kann vorgesehen sein, dass durch die Einschiebbewegung, also einer Bewegung, welche zumindest teilweise parallel zur Auflagefläche steht, das elastische Element automatisch hochgehoben und eine Vorspannung erzeugt wird.

Weiters kann vorgesehen sein, dass das elastische Element den Ventilteil in der geschlossenen Stellung festlegt. Mit festlegen ist dabei gemeint, dass das elastische Element den Ventilkörper im Wesentlichen über der Auslassöffnung hält, zumindest bis der Grenzdruck erreicht ist und das Ventil öffnet. Damit verhindert das elastische Element, dass der Ventilkörper durch Erschütterungen, ungewollte Manipulationen oder leichte Druckdifferenzen verschoben wird.

In diesem Sinne ist auch vorteilhaft, wenn das elastische Element den Ventilteil formschlüssig festlegt. Dies kann den Zusammenbau erleichtern, da durch das Erreichen des Formschlusses automatisch die optimale Position des Ventilteils offensichtlich wird. Alternativ kann eine reibschlüssige Festlegung vorliegen. Dabei können das elastische Element und der Ventilteil auch miteinander verklebt sein.

Es ist besonders vorteilhaft, wenn der Ventilteil zumindest eine Festlegeschulter aufweist, an welcher das elastische Element den Ventilteil in der geschlossenen Stellung formschlüssig festlegt. Mit Festlegeschulter ist dabei eine Erhöhung gemeint, welche die Bewegung des Ventilteils in zumindest eine Richtung durch Anliegen an dem elastischen Element begrenzt. Dabei kann ein Spiel zwischen Festlegschulter und elastischem Element vorgesehen sein. Alternativ kann auch zumindest eine Festlegeschulter vorgesehen sein, an welcher der Grundkörper oder ein Teil des Gehäuses, an dem das Sicherheitsventil angeordnet ist, den Ventilteil in der geschlossenen Stellung formschlüssig festlegt.

Weiters ist vorteilhaft, wenn das elastische Element als Blattfeder ausgeführt ist. Blattfedern sind leicht und kostengünstig herstellbar und können beim Spritzgießen oder anderen Herstellungsprozessen des Gehäuses leicht vorgesehen werden.

Um eine fluiddichte Verbindung zwischen dem Ventilteil und dem Grundkörper aufzubauen ist es vorteilhaft, wenn der Ventilteil zumindest ein Dichtungselement zum Abdichten der Verbindung zwischen dem Ventilteil und dem Grundkörper bei geschlossener Stellung aufweist.

Zum Schutz des Ventilteils und Erhöhung der mechanischen Stabilität kann es vorteilhaft sein, wenn der Grundkörper eine Schutzabdeckung im Bereich der Auslassöffnung aufweist und der Ventilteil zwischen Schutzabdeckung und Auslassöffnung angeordnet ist. Die Schutzabdeckung kann dabei Öffnungen oder Ausnehmungen aufweisen, um einen Fluidfluss bei der Öffnung zu gewährleisten.

Besonders vorteilhaft ist, wenn der Grundkörper eine seitlich der Auslassöffnung angeordnete Einführöffnung zum Einführen des Ventilteils aufweist. Damit kann in einem Arbeitsschritt einfach und schnell der Ventilteil in Position gebracht werden.

Um eine ausreichende Widerstandsfähigkeit zu erhalten kann vorgesehen sein, dass der Ventilteil einen Hauptkörper, vorzugsweise aus Hartkunststoff, aufweist. Der Hauptkörper übernimmt dabei hauptsächlich die kraftübertragende Funktion zwischen Ventilkörper und Grundkörper und ermöglicht einen ausreichend festen Verschluss der Auslassöffnung.

Weiters kann vorgesehen sein, dass der Hauptkörper des Ventilteils einen Zentrierring aufweist, an dem das elastische Element zumindest teilweise anliegt und den Ventilteil zentriert. Mit Zentrierung ist dabei gemeint, dass der Ventilteil oberhalb der Auslassöffnung mittig angeordnet und gehalten wird, also im Wesentlichen zentral über dieser angeordnet ist. Durch die Zentrierung kann eine optimale Position über der Auslassöffnung und damit ein optimaler Verschluss dieser erreicht werden.

Besonders vorteilhaft ist, wenn das elastische Element auf dem Hauptkörper des Ventilteils anliegt. Damit wird die Vorspannung direkt auf den Teil des Ventilteils geleitet, der diese auf den Grundkörper überträgt. Damit ist eine besonders stabile Ausführungsform gefunden.

Besonders vorteilhaft ist, wenn der Ventilteil eine semipermeable Membran aufweist. Die semipermeable Membran kann dazu eingerichtet sein, durchlässig für Gase oder bestimmte Gase zu sein, jedoch undurchlässig für Flüssigkeiten oder bestimmte Flüssigkeiten wie Wasser zu sein. Dadurch können kleinere Druckunterschiede zwischen dem abgeschlossenen Raum und der Umgebung ausgeglichen werden, ohne, dass die Gefahr einer Verunreinigung entsteht. Erst wenn der Druck schlagartig steigt, damit die Passierkapazität der Membran überschritten wird und letztendlich der Schwellendruck überschritten wird, öffnet das Sicherheitsventil.

Damit hat das Sicherheitsventil duale Wirkung, indem es neben seiner Funktion als bei Überschreitung des Schwellendrucks sich öffnenden Sicherheitsventils ebenso Druckausgleichwirkung unter normalen Bedingungen aufweist.

Besonders vorteilhaft ist, wenn die semipermeable Membran von dem Hauptkörper des Ventilteils umschlossen ist. Damit wird die Membran auf allen Seiten vom Hauptkörper gestützt und wenig mechanische Kraft auf diese ausgeübt.

In der Folge wird die vorliegende Erfindung anhand einer in den Figuren dargestellten nicht einschränkenden Ausführungsvariante näher erläutert. Es zeigen:
- Fig. 1: eine Ausführungsform eines erfindungsgemäßen Sicherheitsventils in einer schematischen, geschnittenen Seitenansicht in einer bestimmungsgemäßen Einbaustellung;
- Fig. 2: die Ausführungsform aus Fig. 1 in einer weiteren Seitenansicht, geschnitten in einer Ebene quer zum Schnitt aus Fig. 1;
- Fig. 3: eine Seitenansicht der Ausführungsform von schräg unten;
- Fig. 4: einen Montageschritt der Ausführungsform in einer schematischen Seitenansicht;

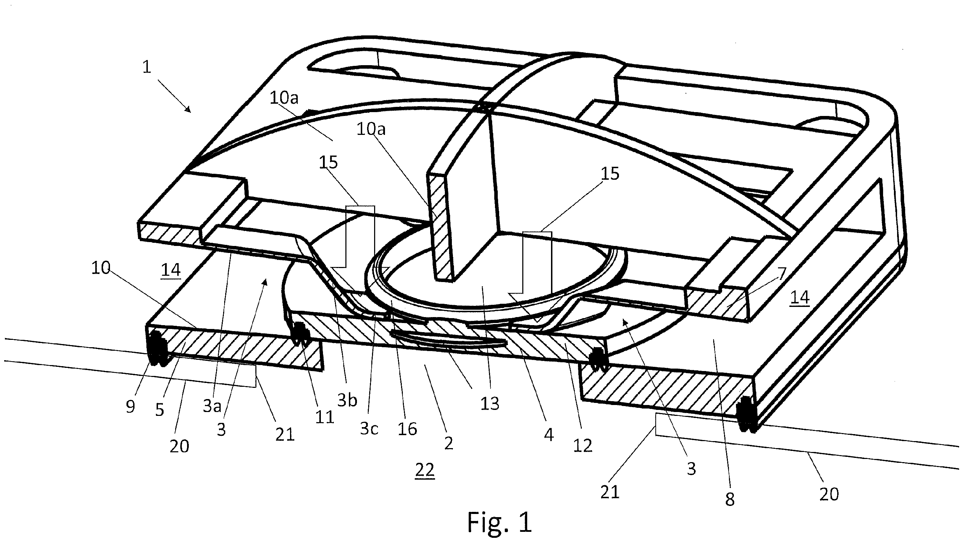

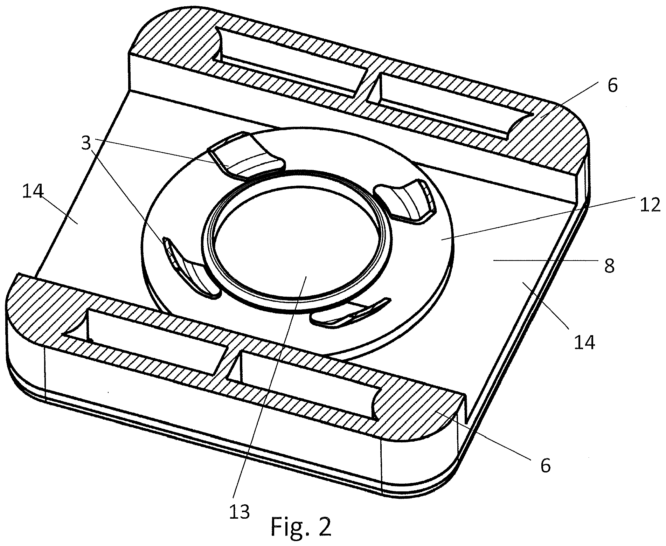

Figuren 1 bis 3 zeigen eine Ausführungsform in zusammengebautem Zustand, mit einem Grundkörper 1, welcher ein Unterteil 5 und eine über Stützen 6 vom Unterteil 5 beabstandete Schutzabdeckung 7 aufweist. Dabei sind zwei Stützen 6 voneinander gegenüberliegend an den Seiten des Unterteils 5 angeordnet, womit sich zwischen Unterteil 5 und Schutzabdeckung 7 ein Kanal 8 mit zwei Einführöffnungen 14 bildet. Die Schutzabdeckung 7 ist oberhalb der Auslassöffnung 2 angeordnet und deckt diese ab. In Fig. 1 ist das Sicherheitsventil an einer Gehäusewand 20 eines Batteriegehäuses angeordnet, wobei das Batteriegehäuse zumindest ein Batteriemodul aufweist und im Wesentlichen dicht ist. Der Unterteil 5 weist mittig eine Auslassöffnung 2 auf, welche rund ausgeführt ist. Eine von der Schutzabdeckung 7 abgewandte Verbindungsfläche des Unterteils 5 ist mit der Gehäusewand 20 verbunden, sodass die Auslassöffnung 2 mit einer Öffnung 21 der Gehäusewand 20 strömungsverbunden ist. Die Öffnung 21 der Gehäusewand 20 ist größer als die Auslassöffnung 2, wird jedoch vollständig vom Grundkörper 1 umgrenzt. Die Öffnung 21 kann auch kleiner oder gleich groß in Bezug zur Auslassöffnung 2 sein.

Damit verschließt der Grundkörper 1 abgesehen von der Auslassöffnung 2 die Öffnung 21. Somit steht die Auslassöffnung 2 auch in Strömungsverbindung zu dem Raum 22 jenseits der Gehäusewand 20. Zur Abdichtung mit der Gehäusewand 20 ist an der Verbindungsfläche eine Dichtung 9 vorgesehen. Die Schutzabdeckung 7 weist zwei Hauptbalken 10a auf, welche mehrere Belüftungsöffnungen begrenzen.

Der Grundkörper 1 weist insgesamt vier elastische Elemente 3 auf, welche mit dem Grundkörper 1 einstückig verbunden sind und gleichmäßig um die Auslassöffnung 2 angeordnet sind. In dieser Ausführungsform sind die elastischen Elemente 3 einstückig mit der Schutzabdeckung 7 über Verbindungsbereiche 3a verbunden. Die elastischen Elemente 3 sind als Blattfedern ausgeführt, welche sich in Richtung der Mitte der Auslassöffnung 2 zuerst im Verbindungsbereich 3a im Wesentlichen parallel zur Auslassöffnung 2 und dann in einem Federbereich 3b in Richtung der Auslassöffnung 2 erstrecken. Darüber hinaus weisen sie Endbereiche 3c auf, welche wieder einen flacheren Winkel zur Auslassöffnung 2 aufweisen, als die Federbereiche 3b. Damit weisen die elastischen Elemente 3 im Schnitt im Wesentlichen eine S-Form auf.

Zwischen den elastischen Elementen 3 und dem Unterteil 5 ist ein Ventilteil 4 angeordnet, welches durch die elastischen Elemente 3 gegen eine Auflagefläche 10 des Grundkörpers 1, in diesem Fall des Unterteils 5, drückt und damit vorspannt (siehe Pfeile 15). Die Auflagefläche 10 umgrenzt die kreisförmige Auslassöffnung 2 vollständig und der Ventilteil 4 liegt durchgehend um die Auslassöffnung 2 an der Auflagefläche 10 an, womit der Ventilteil 4 die Auslassöffnung 2 vollständig abdeckt. Im Bereich der Berührung zwischen Ventilteil 4 und Auflagefläche 10 ist ein Dichtungselement 11 am Ventilteil 4 vorgesehen. Damit wird die Öffnung der Gehäusewand 20, über der das Sicherheitsventil anordenbar ist, vollständig abgedichtet.

Der Ventilteil 4 weist einen Hauptkörper 12 mit einer mittig angeordneten Ausnehmung auf, in die eine semipermeable Membran 13 angeordnet ist. Vorzugsweise ist diese Membran 13 in den Hauptkörper eingespritzt. Der Hauptköper 12 weist um die kreisförmige Ausnehmung einen Zentrierring 16 auf, welcher als Festlegeschulter dient und als Erhebung in Bezug zum restlichen Hauptkörper 12 ausgeführt ist. An diesem Zentrierring 16 liegen die elastischen Elemente 3 im zusammengebauten Zustand an, gegebenenfalls mit Spiel, wodurch der Ventilteil 4 von den elastischen Elementen 3 formschlüssig oberhalb der Auslassöffnung 2 gehalten und über diese zentriert wird. Die Endbereiche 3c verhindern das zu starke Verrücken des Ventilteils 4 gegenüber dem Grundkörper 1. Soll der Ventilteil 4 entfernt werden, so müssen zumindest zwei elastische Elemente 3 elastisch angehoben werden und der Ventilteil 4 entlang der Auflagefläche 10 durch den Kanal 8 geschoben werden.

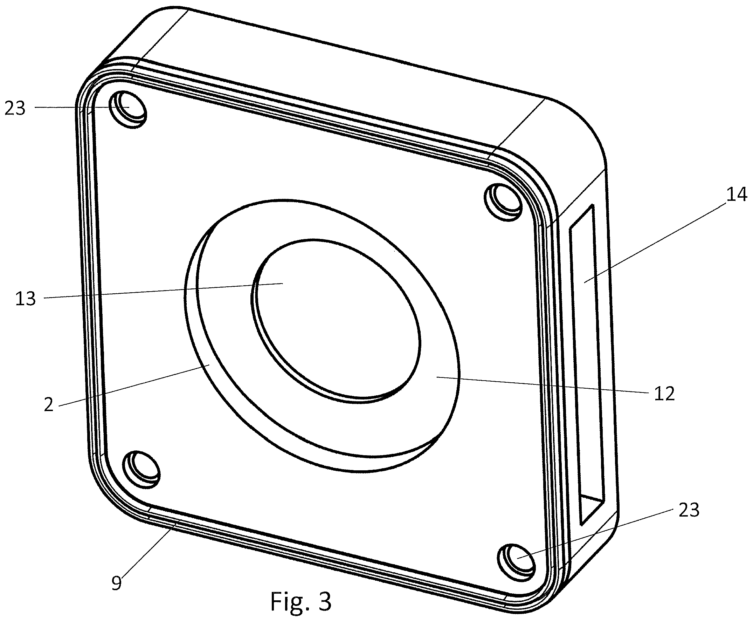

In Fig. 3 wird ersichtlich, dass auf der Verbindungsfläche des Grundkörpers 1 vier Aufnahmen 23 für Schrauben (nicht dargestellt) angeordnet sind, welche das Sicherungsventil an einer Gehäusewand 20 festlegen können. Diese sind in den Ecken des Grundkörpers 1 angeordnet, im Bereich der Stützen 6. Dabei können die Schrauben selbstformend ausgeführt sein. Es kann auch nur eine oder eine andere beliebige Anzahl an Schrauben vorgesehen sein.

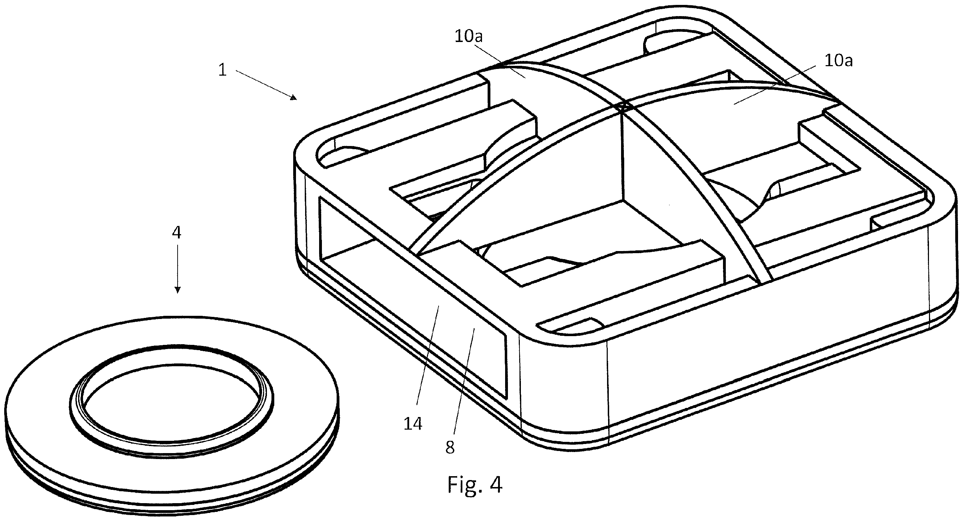

In Fig. 4 wird schematisch ein Montageschritt der in den weiteren Figuren gezeigten Ausführungsform gezeigt. Dabei werden der Ventilkörper 4 und der Grundkörper 1 dieser zweiteiligen Ausführungsform zusammengeführt. Dazu wird der Ventilkörper 4 durch eine Einführöffnung 14 in den Grundkörper entlang der Auflagefläche 10 eingeführt. Der Grundkörper 1 ist in Bezug zu einer Mittelebene normal zur Auslassöffnung 2 symmetrisch ausgeführt. Dies hat den Vorteil, dass unwichtig ist, über welche Einführöffnung 14 der Ventilteil 4 eingeführt wird. Dabei werden die elastischen Elemente 3 durch den Ventilkörper 4 elastisch nach oben gebogen, geben damit den Platz für den Ventilkörper 4 frei und spannen ihn vor. Alternativ kann vorgesehen sein, dass die elastischen Elemente 3 zumindest teilweise während des Einführens des Ventilteils 4 von der Auslassöffnung 2 durch den Zusammenbauenden oder ein Werkzeug elastisch weggebogen werden.

Sobald die zwei elastischen Elemente 3, die auf der Seite der verwendeten Einführöffnung 4 liegen, am Rand des Zentrierrings 16 angeordnet sind, schnappen diese nach unten und verhindern die Rückwärtsbewegung des Ventilteils 4. Die übrigen elastischen Elemente verhindern durch Anliegen am Zentrierring 16 das zu weite Verschieben des Ventilteils 4. Durch das Einschnappen ist dem Monteur sofort klar, dass die Zusammenführung abgeschlossen ist.

## Patentansprüche

1. Sicherheitsventil, insbesondere für ein Gehäuse wie ein Batteriegehäuse, mit einem Grundkörper (1), zumindest einem elastischen Element (3) und einem Ventilteil (4), wobei das elastische Element (3) den Ventilteil (4) in eine geschlossene Stellung vorspannt, wobei der Ventilteil (4) in der geschlossenen Stellung an dem Grundkörper (1) anliegt und zumindest eine Auslassöffnung (2) des Grundkörpers (1) verschließt, wobei das elastische Element (3) einstückig mit dem Grundkörper (1) verbunden ist, **dadurch gekennzeichnet, dass** der Ventilteil (4) zwischen das elastische Element (3) und eine um die Auslassöffnung (2) angeordnete Auflagefläche (10) des Grundkörpers (1) einschiebbar ist.

2. Sicherheitsventil nach Anspruch 1, **dadurch gekennzeichnet, dass** das elastische Element (3) den Ventilteil (4) in der geschlossenen Stellung festlegt.

3. Sicherheitsventil nach Anspruch 2, **dadurch gekennzeichnet, dass** das elastische Element (3) den Ventilteil (4) formschlüssig festlegt.

4. Sicherheitsventil nach Anspruch 3, **dadurch gekennzeichnet, dass** der Ventilteil (4) zumindest eine Festlegeschulter aufweist, an welcher das elastische Element (3) den Ventilteil (4) in der geschlossenen Stellung formschlüssig festlegt.

5. Sicherheitsventil nach einem der Ansprüche 1 bis 4, **dadurch gekennzeichnet, dass** das elastische Element (3) als Blattfeder ausgeführt ist.

6. Sicherheitsventil nach einem der Ansprüche 1 bis 5, **dadurch gekennzeichnet, dass** der Ventilteil (4) zumindest ein Dichtungselement (11) zum Abdichten der Verbindung zwischen dem Ventilteil (4) und dem Grundkörper (1) bei geschlossener Stellung aufweist.

7. Sicherheitsventil nach einem der Ansprüche 1 bis 6, **dadurch gekennzeichnet, dass** der Grundkörper (1) eine Schutzabdeckung (7) im Bereich der Auslassöffnung (2) aufweist und dass der Ventilteil (4) zwischen Schutzabdeckung (7) und Auslassöffnung (2) angeordnet ist.

8. Sicherheitsventil nach Anspruch 7, **dadurch gekennzeichnet, dass** der Grundkörper (1) eine seitlich der Auslassöffnung (2) angeordnete Einführöffnung (14) zum Einführen des Ventilteils (4) aufweist.

9. Sicherheitsventil nach einem der Ansprüche 1 bis 8, **dadurch gekennzeichnet, dass** der Ventilteil (4) einen Hauptkörper (12), vorzugsweise aus Hartkunststoff, aufweist.

10. Sicherheitsventil nach Anspruch 9, **dadurch gekennzeichnet, dass** der Hauptkörper (12) des Ventilteils (4) einen Zentrierring (16) aufweist, an dem das elastische Element (3) zumindest teilweise anliegt und den Ventilteil (4) zentriert.

11. Sicherheitsventil nach Anspruch 9 oder 10, **dadurch gekennzeichnet, dass** das elastische Element (3) auf dem Hauptkörper (12) des Ventilteils (4) anliegt.

12. Sicherheitsventil nach einem der Ansprüche 1 bis 11, **dadurch gekennzeichnet, dass** der Ventilteil (4) eine semipermeable Membran (13) aufweist.

13. Sicherheitsventil nach Anspruch 12, **dadurch gekennzeichnet, dass** die semipermeable Membran (13) von dem Hauptkörper (12) des Ventilteils (4) umschlossen ist.

## Claims

1. Safety valve, in particular for a housing such as a battery housing, having a base body (1), at least one elastic element (3) and a valve part (4), wherein the elastic element (3) pretensions the valve part (4) into a closed position, wherein the valve part (4) rests against the base body (1) in the closed position and closes at least one outlet opening (2) of the base body (1), wherein the elastic element (3) is integrally connected to the base body (1), **characterised in that** the valve part (4) can be inserted between the elastic element (3) and a bearing surface (10) of the base body (1) arranged around the outlet opening (2).

2. Safety valve according to claim 1, **characterised in that** the elastic element (3) fixes the valve part (4) in the closed position.

3. Safety valve according to claim 2, **characterised in that** the elastic element (3) fixes the valve part (4) in a form-fitting manner.

4. Safety valve according to claim 3, **characterised in that** the valve part (4) has at least one fixing shoulder on which the elastic element (3) fixes the valve part (4) in a form-fitting manner in the closed position.

5. Safety valve according to one of the claims 1 to 4, **characterised in that** the elastic element (3) is designed as a leaf spring.

6. Safety valve according to one of claims 1 to 5, **characterised in that** the valve part (4) has at least one sealing element (11) for sealing the connection between the valve part (4) and the base body (1) in the closed position.

7. Safety valve according to one of the claims 1 to 6, **characterised in that** the base body (1) has a protective cover (7) in the region of the outlet opening (2), and **in that** the valve part (4) is arranged between the protective cover (7) and the outlet opening (2).

8. Safety valve according to claim 7, **characterised in that** the base body (1) has an insertion opening (14) arranged laterally of the outlet opening (2) for inserting the valve part (4).

9. Safety valve according to one of claims 1 to 8, **characterised in that** the valve part (4) has a main body (12), preferably made of hard plastic.

10. Safety valve according to claim 9, **characterised in that** the main body (12) of the valve part (4) has a centering ring (16) against which the elastic element (3) at least partially abuts and centers the valve part (4).

11. Safety valve according to claim 9 or 10, **characterised in that** the elastic element (3) rests on the main body (12) of the valve part (4).

12. Safety valve according to one of claims 1 to 11, **characterised in that** the valve part (4) has a semipermeable membrane (13).

13. Safety valve according to claim 12, **characterised in that** the semipermeable membrane (13) is enclosed by the main body (12) of the valve part (4).

## Revendications

1. Soupape de sécurité, notamment pour un boîtier tel qu'un boîtier de batterie comprenant un corps de base (1), au moins un élément élastique (3) et une partie de soupape (4),
l'élément élastique (3) assurant la précontrainte de la partie de soupape (4) en position fermée,
- la partie de soupape (4) en position fermée s'appliquant contre le corps de base (1) et fermant au moins un orifice de sortie (2) du corps de base (1), * l'élément élastique (3) étant relié en une seule pièce au corps de base (1), soupape de sécurité **caractérisée en ce que**
la partie de soupape (4) se glisse entre l'élément élastique (3) et une surface d'appui (10) du corps de base (1) prévue autour de l'orifice de sortie (2).

2. Soupape de sécurité selon la revendication 1,
**caractérisée en ce que**
l'élément élastique (3) fixe la partie de soupape (4) en position de fermeture.

3. Soupape de sécurité selon la revendication 2,
**caractérisée en ce que**
l'élément élastique (3) fixe la partie de soupape (4) par une liaison par la forme.

4. Soupape de sécurité selon la revendication 3,
**caractérisée en ce que**
la partie de soupape (4) comporte au moins un épaulement de fixation contre lequel s'applique l'élément élastique (3) de la partie de soupape (4) par une liaison par la forme en position fermée.

5. Soupape de sécurité selon l'une des revendications 1 à 4,
**caractérisée en ce que**
l'élément élastique (3) est sous la forme d'un ressort-lame.

6. Soupape de sécurité selon l'une des revendications 1 à 5,
**caractérisée en ce que**
la partie de soupape (4) comporte au moins un élément d'étanchéité (11) pour assurer l'étanchéité de la liaison entre la partie de soupape (4) et le corps de base (1) en position fermée.

7. Soupape de sécurité selon l'une des revendications 1 à 6,
**caractérisée en ce que**
le corps de base (1) comporte une couverture de protection (7) dans la région de l'orifice de sortie (2) et la partie de soupape (4) est entre la couverture de protection (7) et l'orifice de sortie (2).

8. Soupape de sécurité selon la revendication 7,
**caractérisée en ce que**
le corps de base (1) comporte une ouverture d'entrée (14) sur le côté de l'orifice de sortie (2) pour introduire la partie de soupape (4).

9. Soupape de sécurité selon l'une des revendications 1 à 8,
**caractérisée en ce que**
la partie de soupape (4) comporte un corps principal (12), de préférence en une matière plastique dure.

10. Soupape de sécurité selon la revendication 9,
**caractérisée en ce que**
le corps principal (12) de la partie de soupape (4) comporte un anneau de centrage (16) contre lequel l'élément élastique (3) s'applique au moins en partie et assure le centrage de la partie de soupape (4).

11. Soupape de sécurité selon la revendication 9 ou 10,
**caractérisée en ce que**
l'élément élastique (3) est appliqué sur le corps principal (12) de la partie de soupape (4).

12. Soupape de sécurité selon l'une des revendication 1 à 11, **caractérisée en ce que**
la partie de soupape (4) comporte une membrane semi-perméable (13).

13. Soupape de sécurité selon la revendication 12,
**caractérisée en ce que**
la membrane semi-perméable (13) est entourée par le corps principal (12) de la partie de soupape (4).
